# DEMANDE DE BREVET EUROPEEN

(11) **EP 2 853 410 A1**
(43) Date de publication de la demande: **01.04.2015**
(21) Numéro de dépôt: 13306316.4
(22) Date de dépôt: 26.09.2013
(51) Int. Cl.: B42D 15/00, B42D 25/00, B32B 37/00, B41M 3/00, B41M 3/14, B42D 25/324

(54) **Procédé de fabrication d'un document sécurisé multicouches comportant au moins une image à effet lenticulaire**

(71) Demandeur: Gemalto SA, 92190 Meudon (FR)
(72) Inventeur: Karafotis, Stéphane, 92190 Meudon (FR)
(74) Mandataire: Cour, Pierre

(57) **Abrégé**

La présente invention concerne un procédé de fabrication d'un document sécurisé multicouches (1) comportant au moins une image à effet lenticulaire (5), ledit procédé comportant les étapes suivantes :
- impression, par un dispositif d'impression, d'au moins un motif (20), comportant au moins deux images entrelacées (7a, 7b), sur au moins une face (3) un corps de document sécurisé (10) opaque,
- mise en place d'une couche de protection transparente (30) sur au moins la face (3) du corps de document sécurisé (10) portant au moins un motif (20),
- lamination du document sécurisé (1),
- impression, sur la couche de protection transparente (30), au moyen du dispositif d'impression ayant réalisé l'impression du au moins un motif (20), d'un vernis, de sorte à former des lentilles (50) alignées avec les au moins deux images entrelacées (7a, 7b) du au moins un motif (20).

## Description

La présente demande concerne le domaine des impressions à effet lenticulaire et plus précisément un procédé de fabrication d'un document sécurisé multicouches comportant une impression lenticulaire.

Il est connu afin d'améliorer l'esthétique et la sécurité de certains documents de sécurité tels que des cartes d'identification ou à puce, de les pourvoir d'image à effet lenticulaire. Une image à effet lenticulaire permet d'obtenir un effet de relief ou de changement d'image en fonction de l'angle de vision d'un individu.

Les impressions lenticulaires sont généralement réalisées par impression lithographique offset d'au moins deux images entrelacées sur la face arrière d'une feuille lenticulaire transparente. La feuille lenticulaire comporte sur sa face avant des lentilles cylindriques ou sphériques de mêmes caractéristiques optiques. Ces lentilles ont la particularité d'avoir une longueur focale telle que la face arrière (la face lisse) de la feuille lenticulaire est confondue avec le plan focal des lentilles.

Avec ce type d'impression lenticulaire, il est difficile d'obtenir un effet lenticulaire localement, c'est-à-dire sur une portion définie du document sécurisé. En effet ce type d'impression lenticulaire nécessite généralement que la feuille lenticulaire recouvre toute la surface du document sécurisé, ce qui peut diminuer son esthétique générale.

Afin d'obtenir des impressions lenticulaire locales, le document US2009/0315321 propose une impression lithographique offset d'au moins deux images entrelacées sur la face arrière d'une feuille transparente. Les lentilles sont alors réalisées à postériori, après la lamination des couches formant le document sécurisé multicouches, par impression jet d'encre à l'aplomb des au moins deux images entrelacées.

Cependant, ce mode d'impression lenticulaire n'est pas satisfaisant. En effet des difficultés techniques subsistent, notamment d'un point de vue de l'alignement entre les, au moins deux, images entrelacées et les lentilles imprimées qui peut être compliqué ou ne pas être optimal ce qui peut engendrer un rendu peu satisfaisant.

L'un des buts de la présente invention est donc de remédier au moins partiellement aux inconvénients de l'art antérieur et de proposer un procédé de fabrication d'un document sécurisé multicouches, comportant au moins une image à effet lenticulaire, amélioré.

La présente invention concerne donc un procédé de fabrication d'un document sécurisé multicouches comportant au moins une image à effet lenticulaire, ledit procédé comportant les étapes suivantes :
- impression, par un dispositif d'impression, d'au moins un motif, comportant au moins deux images entrelacées, sur au moins une face un corps de document sécurisé opaque,
- mise en place d'une couche de protection transparente sur au moins la face du corps de document sécurisé portant au moins un motif,
- lamination du document sécurisé,
- impression, sur la couche de protection transparente, au moyen du dispositif d'impression ayant réalisé l'impression du au moins un motif, d'un vernis, de sorte à former des lentilles alignées avec les au moins deux images entrelacées du au moins un motif.

Le fait que les impressions du motif et des lentilles se fassent avec un seul et même dispositif d'impression, permet un alignement optimal entre les lentilles et les, au moins deux, images entrelacées et ce afin de procurer un effet lenticulaire optimal.

Selon un aspect de l'invention, le dispositif d'impression est une imprimante jet d'encre.

Selon un autre aspect de l'invention, le procédé comporte, avant l'étape de mise en place de la couche de protection transparente, une étape supplémentaire de mise en place d'une couche plastique transparente sur la ou les faces du corps de document sécurisé portant une impression d'au moins un motif.

Selon un autre aspect de l'invention, l'étape de lamination comporte un passage à chaud à une température comprise entre 105 et 115°C.

Selon un autre aspect de l'invention, l'imprimante jet d'encre est pilotée par une unité d'impression électronique et que les impressions des au moins un motif et des lentilles sont réalisées à partir d'un même fichier d'impression enregistré dans ladite unité d'impression électronique.

Selon un autre aspect de l'invention, le corps de document sécurisé est réalisé en matériau plastique.

Selon un autre aspect de l'invention, les lentilles imprimées sont des lentilles cylindriques.

Selon un autre aspect de l'invention, les lentilles imprimées sont des lentilles sphériques.

Selon un autre aspect de l'invention, le vernis est un vernis de type acrylate à séchage ultraviolet.

Selon un autre aspect de l'invention, ledit procédé comporte une étape d'insolation ultraviolet du vernis

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un document sécurisé multicouches en vue de dessus,
- les figures 2a et 2b montrent des représentations schématiques du document sécurisé multicouches de la figure 1 vue par un individu selon deux angles différents,
- la figure 3 montre un organigramme des différentes étapes du procédé de fabrication selon l'invention,
- les figures 4 à 6 montrent des représentations schématiques en coupe d'un document sécurisé multicouches selon différentes étapes du procédé de fabrication.

Les éléments identiques sur toutes les figures sont indiqués par les mêmes numéros de références.

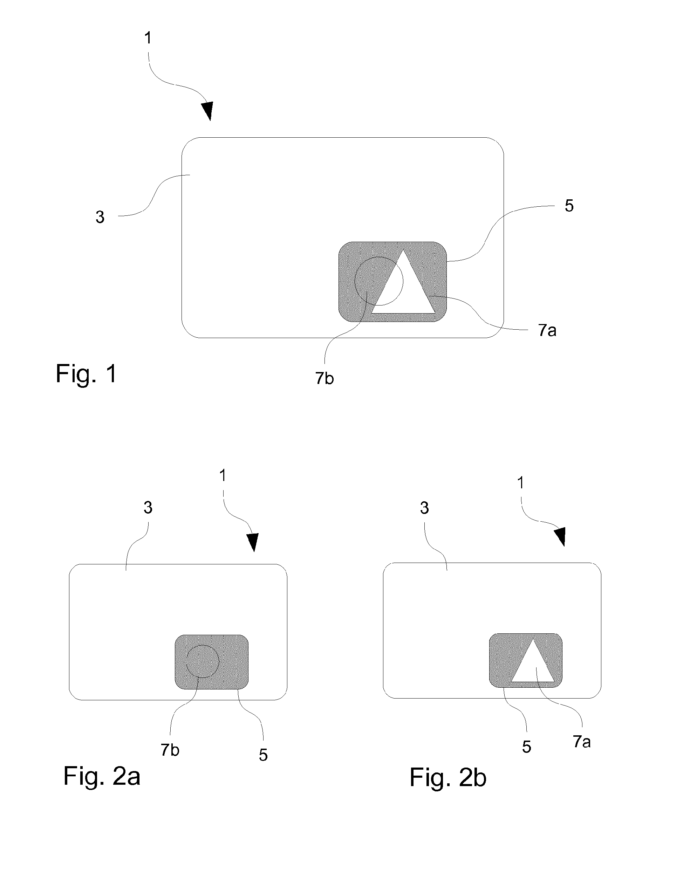

La figure 1 montre une représentation schématique d'un document sécurisé multicouches 1 en vue de dessus. Le document sécurisé multicouches 1 peut être, par exemple, une carte d'indentification ou autre carte à puce comme présenté sur les différentes figures.

Le document sécurisé multicouches 1 comporte localement, sur au moins une de ses faces 3, au moins une image à effet lenticulaire 5. Cette image à effet lenticulaire 5 comporte au moins deux images entrelacées 7a et 7b qui sont visibles l'une ou l'autre selon l'angle par lequel on regarde le document sécurisé 1 comme illustré sur les figures 2a et 2b. Ces figures 2a et 2b montrent la vision qu'a un individu du document sécurisé 1 selon deux angles de vue différents. Afin d'entrelacer les images 7a et 7b, chacune d'elle est divisée en pixels ou bandes disposés en alternance afin de former l'image à effet lenticulaire 5.

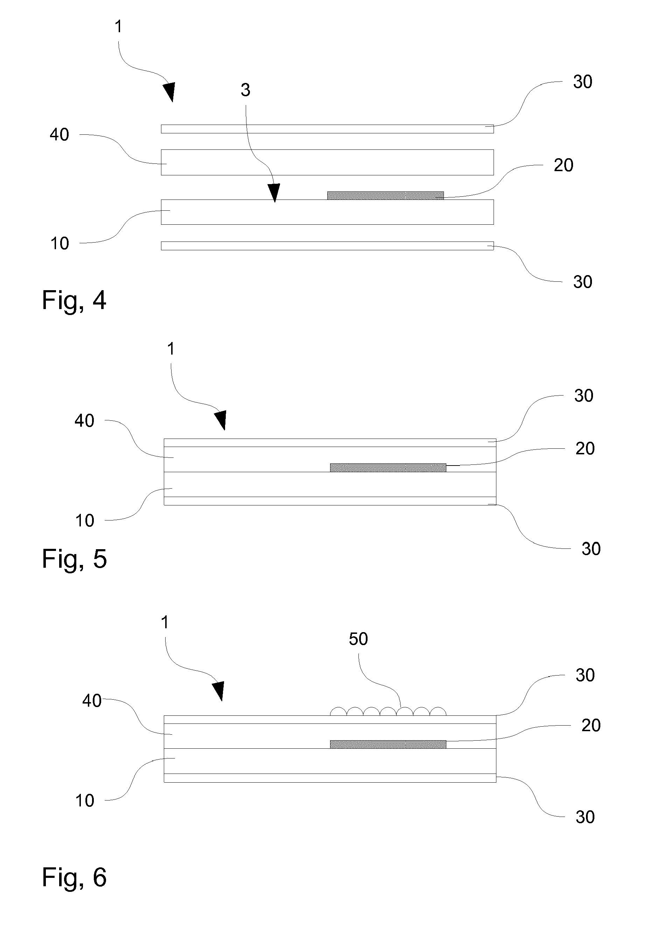

L'effet lenticulaire est obtenu grâce à des lentilles 50 (visible sur la figure 6) placées à l'aplomb des au moins deux images entrelacées 7a, 7b. Chaque lentille grossit un pixel ou une bande d'une des images 7a ou 7b située sous elle, le pixel ou la bande qui est situé dans l'alignement de l'oeil et du centre optique de la lentille 50. Elle prend alors la couleur de ce pixel ou de cette bande. Suivant l'orientation de la carte le pixel ou la bande grossie par la lentille correspond à l'une des deux images entrelacées. Afin d'obtenir un effet lenticulaire optimal, permettant de voir une image ou l'autre, il est donc important que les lentilles 50 et les bandes ou pixels des images entrelacées soient alignées le plus précisément possible.

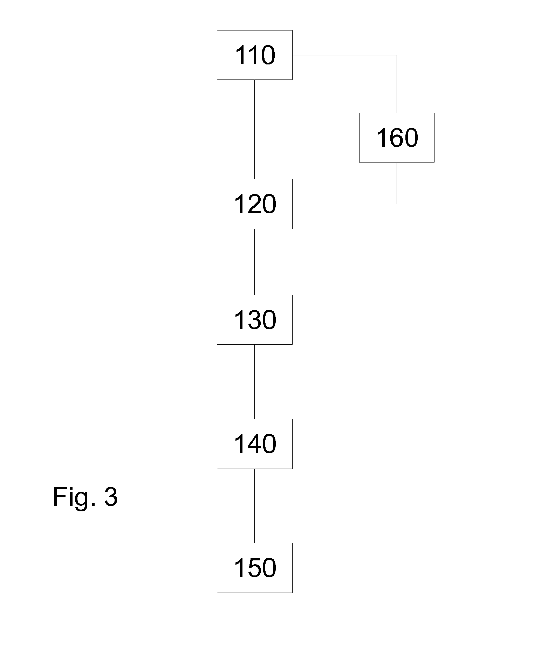

La figure 3 montre un organigramme des étapes du procédé de fabrication 100 du document sécurisé multicouches 1. Différentes étapes de ce procédé de fabrication 100 sont également illustrées par les vues en coupe du document sécurisé multicouches 1 des figures 4 à 6.

Une première étape est une étape 110 d'impression d'au moins un motif 20 comportant deux images entrelacées 7a, 7b, sur au moins une face 3 d'un corps de document sécurisé 10 opaque. Le corps de document sécurisé 10 peut par exemple être en matériau plastique tel que le polychlorure de vinyle (PVC) blanc. L'impression est réalisée par un dispositif d'impression. Le dispositif d'impression peut plus particulièrement être une imprimante jet d'encre pilotée par une unité d'impression électronique dans laquelle est enregistré un fichier d'impression correspondant au motif 20.

L'impression du motif 20 peut être effectué localement sur la face 3 du corps de document sécurisé 10, c'est à dire que le, au moins un, motif 20 ne recouvre qu'une portion définie de la face 3. Le corps de document sécurisé 10 peut ainsi comporter d'autres impressions standards à caractère esthétique comme un logo, photo ou encore une décoration, ou à caractère informatif comme par exemple un texte ou des informations personnelles d'identification.

Une seconde étape du procédé de fabrication 100 est une étape 120 de mise en place d'une couche de protection transparente 30 (ou « overlay » en anglais) sur au moins la face 3 du corps de document sécurisé 10 portant au moins un motif 20. Cette couche de protection transparente 30 est une couche standard utilisée dans la fabrication des documents sécurisés multicouches.

Le procédé de fabrication 100 peut comporter également une étape 150 supplémentaire, avant l'étape 120 de mise en place d'une couche de protection transparente 30, de mise en place d'une couche transparente 40, par exemple en matériau plastique tel que le polychlorure de vinyle (PVC) sur la ou les faces 3 du corps de document sécurisé 10 portant une impression d'au moins un motif 20.

Une troisième étape du procédé de fabrication 100 est une étape 130 de lamination des différentes couches formant le document sécurisé multicouches 1. Afin de limiter le fluage, notamment le fluage du au moins un motif 20, la lamination se fait à basse température. La lamination peut ainsi comporter un premier passage à chaud, à une température comprise entre 105 et 115°C à une pression comprise entre 90 et 110N/cm² pendant une durée de 10 à 20min suivi d'un second passage à froid, à une température comprise entre 15 et 25°C à une pression comprise entre 195 et 215N/cm² pendant une durée de 10 à 20min.

Ces paramètres de lamination permettent de réduire les risques de fluage notamment du, au moins un, motif 20 et donc d'éviter que ce dernier ne se déforme ce qui pourrait être préjudiciable pour l'alignement des, au moins deux, images entrelacées 7a, 7b avec les lentilles 50 afin d'obtenir un effet lenticulaire optimal.

Une quatrième étape est une étape 140 d'impression sur la couche de protection transparente 30 d'un vernis, de sorte à former des lentilles 50 alignées avec les au moins deux images entrelacées 7a, 7b. Le vernis est imprimé au moyen du même dispositif d'impression ayant réalisé l'impression du au moins un motif 20.

Le fait que les impressions du motif 20 et des lentilles 50 se fassent avec un seul et même dispositif d'impression, permet un alignement optimal entre les lentilles 50 et les, au moins deux, images entrelacées 7a, 7b et ce afin de procurer un effet lenticulaire optimal. De plus, dans le cas ou le dispositif d'impression est une imprimante jet d'encre, l'impression des lentilles peut être réalisée à partir du même fichier d'impression enregistré dans l'unité d'impression, ce qui facilite l'alignement des lentilles avec les au moins deux images 7a, 7 b et diminue les risques de décalage entre elles ce qui pourrait entrainer une détérioration de l'effet lenticulaire recherché.

Les lentilles 50 peuvent être des lentilles cylindriques ou bien des lentilles sphériques selon le type de motif 20 et selon l'entrelacement des images 7a, 7b qui le composent. Dans le cas ou les images 7a 7b sont divisées en bandes placées en alternance, les lentilles 50 seront des lentilles cylindriques. Dans le cas ou les images 7a 7b sont divisées en pixels placés en alternance, les lentilles 50 seront des lentilles sphériques.

Les lentilles 50 sont imprimées de telle sorte que leur point focal arrive sur le motif 20. Ainsi, l'épaisseur des couches séparant la surface de la couche de protection transparente 30 et le motif 20 doit être pris en compte afin d'imprimer les lentilles 50.

Le vernis utilisé est plus particulièrement un vernis de type acrylate à séchage ultraviolet. En conséquence, le procédé de fabrication 100 peut comporter une étape additionnelle 150 d'insolation ultraviolet des lentilles 50 imprimées. Le vernis peut par exemple avoir la composition suivante :
- 85 à 90% d'ester acrylique,
- 10 à 15% d'oxyde Diphenyl (2,4,6,-trimethylbenzoyl) phosphine, et
- 0 à 5% d'additifs.

Ainsi, on voit bien que du fait que les impressions du motif 20 et des lentilles 50 sont réalisées avec une même imprimante jet d'encre, l'alignement des lentilles 50 avec les images entrelacées 7a, 7b du motif 20 est optimal.

## Revendications

1. Procédé de fabrication d'un document sécurisé multicouches (1) comportant au moins une image à effet lenticulaire (5), **caractérisé en ce qu'il** comporte les étapes suivantes :
- Impression, par un dispositif d'impression, d'au moins un motif (20), comportant au moins deux images entrelacées (7a, 7b), sur au moins une face (3) un corps de document sécurisé (10) opaque,
- mise en place d'une couche de protection transparente (30) sur au moins la face (3) du corps de document sécurisé (10) portant au moins un motif (20),
- lamination du document sécurisé (1),
- impression, sur la couche de protection transparente (30), au moyen du dispositif d'impression ayant réalisé l'impression du au moins un motif (20), d'un vernis, de sorte à former des lentilles (50) alignées avec les au moins deux images entrelacées (7a, 7b) du au moins un motif (20).

2. Procédé de fabrication selon la revendication précédente, **caractérisé en ce que** le dispositif d'impression est une imprimante jet d'encre.

3. Procédé de fabrication selon la revendication 1, **caractérisé en ce qu'il** comporte, avant l'étape de mise en place de la couche de protection transparente (30), une étape supplémentaire de mise en place d'une couche plastique transparente (20) sur la ou les faces (3) du corps de document sécurisé (10) portant une impression d'au moins un motif (20).

4. Procédé de fabrication selon la revendication 1, **caractérisé en ce que** l'étape de lamination comporte un passage à chaud à une température comprise entre 105 et 115°C.

5. Procédé de fabrication selon la revendication 2, **caractérisé en ce que** l'imprimante jet d'encre est pilotée par une unité d'impression électronique et que les impressions des au moins un motif (20) et des lentilles (50) sont réalisées à partir d'un même fichier d'impression enregistré dans ladite unité d'impression électronique.

6. Procédé de fabrication selon la revendication 1, **caractérisé en ce que** le corps de document sécurisé (10) est réalisé en matériau plastique.

7. Procédé de fabrication selon la revendication 1, **caractérisé en ce que** les lentilles (50) imprimées sont des lentilles cylindriques.

8. Procédé de fabrication selon la revendication 1, **caractérisé en ce que** les lentilles (50) imprimées sont des lentilles sphériques.

9. Procédé de fabrication selon la revendication 1, **caractérisé en ce que** le vernis est un vernis de type acrylate à séchage ultraviolet.

10. Procédé de fabrication selon la revendication précédente, **caractérisé en ce qu'il** comporte une étape d'insolation ultra-violet du vernis.
